# EUROPÄISCHE PATENTSCHRIFT

(11) **EP 0 883 511 B1**
(45) Veröffentlichungstag und Bekanntmachung des Hinweises auf die Patenterteilung: **06.10.1999**
(21) Anmeldenummer: 97907013.3
(22) Anmeldetag: 22.01.1997
(51) Int. Cl.: B60L 11/18

(54) **REGELUNGSVORRICHTUNG FÜR EINE ASYNCHRONMASCHINE, INSBESONDERE ALS ANTRIEB FÜR ELEKTROFAHRZEUGE**
REGULATOR DEVICE FOR AN ASYNCHRONOUS MACHINE USED IN PARTICULAR AS A DRIVE FOR ELECTRIC VEHICLES
DISPOSITIF DE REGULATION POUR UN MOTEUR ASYNCHRONE SERVANT NOTAMMENT D'ORGANE D'ENTRAINEMENT POUR VEHICULES ELECTRIQUES

(30) Priorität: 02.03.1996 DE 19608039
(43) Veröffentlichungstag der Anmeldung: 16.12.1998
(73) Patentinhaber: ROBERT BOSCH GMBH, 70442 Stuttgart (DE)
(72) Erfinder: EISENHARDT, Martin, D-71272 Renningen (DE)
(86) Internationale Anmeldenummer: DE9700123
(87) Internationale Veröffentlichungsnummer: WO9731798

(56) Entgegenhaltungen:
- EP-A- 0 555 574
- EP-A- 0 579 513
- DE-A- 3 410 293
- US-A- 5 481 168

## Beschreibung

### Stand der Technik

Die Erfindung betrifft eine Regelungsvorrichtung für eine Asynchronmaschine, insbesondere als Antrieb für Elektrofahrzeuge, nach der Gattung des Hauptanspruchs.

Eine derartige Regelungsvorrichtuung ist aus der US-PS 5 481 168 bekannt. Zur Regelung einer Asynchronmaschine wird bei dieser bekannten Anordnung die Drehzahl eines 3-phasigen Induktionsmotors über einen Analog-Digital-Wandler einer Drehzahlmeßeinrichtung zugeführt. Mittels eines Sollwertgebers wird ein Drehmoment vorgegeben, wobei diese Signale zur Erzeugung von Sollwerten in ein 3-Phasen-System eingespeist werden. Die erfaßte Drehzahl der Asynchronmaschine wird mit der vorgegebenen Drehzahl verglichen und die Differenz als Sollwert dem Leistungsteil eines Wechselrichters zugeführt.

Eine andere bekannte Regelungsvorrichtuung ist die sogenannte feldorientierte Regelung, wie sie beispielsweise in den Siemens Forschungs- und Entwicklungsberichten 1972, F. Blaschke "Das Verfahren der Feldorientierung zur Regelung der Asynchronmaschine", S. 184 ff oder im Fachbuch "Control of Electrical Drives", W. Leonhard, Springer-Verlag, S. 214 - 222, beschrieben ist. Bei der feldorientierten Regelung muß man sowohl die Amplitude des Ständerflußvektors, als auch seine Position in Bezug auf den Rotorflußvektor zu jeder Zeit überwachen. Eine der Hauptaufgaben dabei ist das Entkoppeln der drehmoment- und flußbasierenden Ströme vom Betrag des Ständerstromvektors. Ferner muß dafür gesorgt werden, daß sie in einem rotorbezogenen Koordinatensystem zu jedem Zeitpunkt rechtwinklig aufeinander stehen. Das erfordert die Erfassung der Ständerströme des 3-Phasen-Systems, deren Transformation rotiert und deren Vergleich mit den Sollwertvorgaben für die flußbildende Komponente und die drehmomentbildende Komponente des Stromes. Die Beaufschlagung des Motors mit den neuen Strom/Spannungswerten erfolgt nach der Berechnung und nach der Rücktransformation vom rotierenden Bezugssystem zum stationären Ständer-Koordinatensystem. Bei der feldorientierten Regelung erhält man zwar ein konstantes Drehmoment auch über die Nenndrehzahl, eine verbesserte Geschwindigkeitskonstanz, auch unter schwankenden Lastbedingungen, und im Vollastbetrieb einen hohen Wirkungsgrad, jedoch ist der technische Aufwand hoch und kostenaufwendig.

### VORTEILE DER ERFINDUNG

Die erfindungsgemäße Regelungsvorrichtung mit den kennzeichnenden Merkmalen des Hauptanspruchs erreicht viele Vorteile der feldorientierten Regelung mit technisch einfacheren Mitteln und auf kostengünstigere Weise und insbesondere im Teillastbetrieb einen besseren Wirkungsgrad, was vor allem für Elektrofahrzeuge relevant ist. Die Anforderungen an den Inkrementalgeber sind gering. Ein 4-Quadrantenbetrieb ist möglich. Darüber hinaus wird ein ruckfreies Anfahren aus dem Stand bzw. aus dem beliebig schnellen Rollen entgegen der gewünschten Fahrtrichtung in hervorragender Weise erreicht.

Durch die in den Unteransprüchen aufgeführten Maßnahmen sind vorteilhafte Weiterbildungen und Verbesserungen der im Hauptanspruch angegebenen Regelungsvorrichtung möglich.

Die Sollwert-Vorgabeeinrichtung enthält in vorteilhafter Weise Funktionstabellen für die Rotorfrequenz und die Amplitude des Statorstroms in Abhängigkeit des gewünschten Drehmoment-Sollwerts. Zusätzlich können noch Funktionstabellen für die Lastwinkelvorsteuerung vorgesehen sein. In den aus den Funktionstabellen erhaltenen Werten spiegeln sich die Maschinenparameter. Zu jedem Sollwertwunsch gehört ein anderes Wertepaar bzw. Wertetripel.

Um die jeweilige Drehrichtung der Asynchronmaschine zu berücksichtigen, besitzt die Summiereinrichtung eine in Abhängigkeit der jeweiligen Drehrichtung automatisch umschaltende erste Schalteinrichtung, durch die in der Rückwärts-Schaltstellung die der mechanischen Drehfrequenz proportionalen Signale des Inkrementalgebers negativ und in der Vorwärts-Schaltstellung positiv bewertet werden.

Um auch die gewünschte Drehrichtung und die Richtung des gewünschten Drehmoments bei der Sollwertvorgabe zu berücksichtigen besitzt die Summiereinrichtung zusätzlich eine in Abhängigkeit der gewünschten Richtung des Drehmoments (Generator-/Motor-Betrieb) umschaltende zweite Schalteinrichtung, wobei im Generatorbetrieb die der Rotorfrequenz entsprechenden Signale von den Signalen des Inkrementalgebers vor der Bewertung durch die erste Schalteinrichtung abgezogen und im Motorbetrieb die der Rotorfrequenz entsprechenden Signale den durch die erste Schalteinrichtung bewerteten Signalen des Inkrementalgebers bei vorgegebener Vorwärts-Drehrichtung hinzugefügt und bei vorgegebener Rückwärts-Drehrichtung von diesen abgezogen werden. Auf diese Weise werden bei der Sollwertvorgabe automatisch die augenblickliche Drehrichtung, die gewünschte Drehrichtung und die Richtung des gewünschten Moments berücksichtigt.

Zur entsprechenden Bewertung der der Rotorfrequenz entsprechenden Signale bei der Vorwärts- und Rückwärts-Drehrichtung ist zweckmäßigerweise eine dritte, durch einen Fahrtrichtungsschalter steuerbare Schalteinrichtung vorgesehen.

Zur Bildung eines Referenzsignals aus den Signalen des Inkrementalgebers und den der Rotorfrequenz entsprechenden Signalen ist in vorteilhafter Weise ein Akkumulator vorgesehen, dessen Eingänge zweckmäßigerweise mit den Ausgängen der zweiten und dritten Schalteinrichtung verbunden sind.

Die Auswahl der Sollwerte erfolgt über die in der Summiereinrichtung ermittelten Werte, die jeweils eine Adresse für eine als Sollwertspeicher dienende Sinustabelle bilden. Eine weitere Verbesserung kann noch dadurch erreicht werden, daß eine Lastwinkel-Korrekturstufe zur Korrektur der Adressenwerte in Abhängigkeit eines jeweils zum gewünschten Drehmoment passenden Lastwinkels vorgesehen ist, die insbesondere als Addierstufe ausgebildet ist.

Die gewünschte bzw. durch den Sollwertwunsch vorgegebene Amplitude des Statorstroms wird in vorteilhafter Weise dadurch eingestellt, daß dem Sollwertspeicher eine Multiplizierstufe zur Multiplikation der Strom-Sollwertverläufe mit dem jeweils vorgegebenen Amplitudenwert nachgeschaltet ist.

Der geregelte Wechselrichter enthält zweckmäßigerweise einen 2-Punkt-Regler, dem drei Strom-Sollwertverläufe zugeführt werden, die aus den Sollwertverläufen am Ausgang des Sollwertspeichers mittels einer Umwandlungsstufe gebildet werden.

### ZEICHNUNG

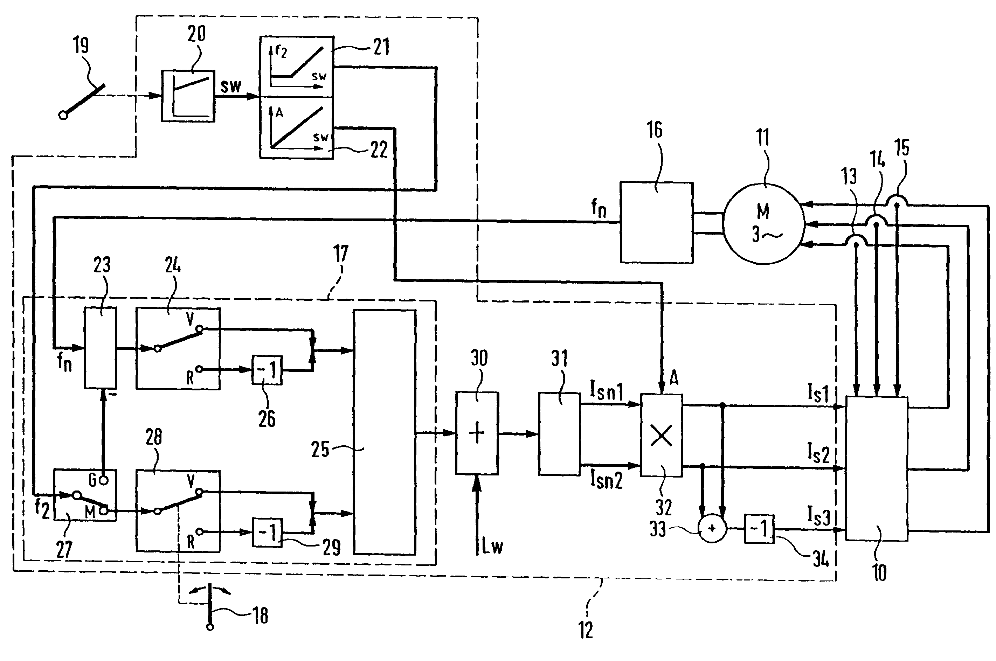

Ein Ausführungsbeispiel der Erfindung ist in der Zeichnung dargestellt und in der nachfolgenden Beschreibung näher erläutert. Die einzige Figur zeigt ein Blockschaltbild einer Regelungsvorrichtung für ein Asynchronmaschine als Ausführungsbeispiel der Erfindung.

### BESCHREIBUNG DES AUSFÜHRUNGSBEISPIELS

Bei dem in der einzigen Figur dargestellten Ausführungsbeispiel steuert ein geregelter Wechselrichter-Leistungsteil 10 eine Asynchronmaschine 11, die zum Antrieb eines im übrigen nicht dargestellten Elektrofahrzeugs dient. Selbstverständlich sind auch andere Verwendungsmöglichkeiten der Asynchronmaschine realisierbar. Der Wechselrichter-Leistungsteil 10 enthält einen nicht im Detail dargestellten 2-Punkt-Hysterseregler zur Einprägung der drei Sollströme Iₛ₁, Iₛ₂ und Iₛ₃ in die Asynchronmaschine 11, wobei diese Sollströme in einer Sollwert-Vorgabeeinrichtung 12 erzeugt werden. Die für die Regelung erforderlichen drei Istströme werden in Strommeßeinrichtungen 13 - 15 in den drei Zuleitungen zur Asynchronmaschine 11 erfaßt und zum Wechselrichter-Leistungsteil 10 rückgeführt. Das Modulationsprinzip beruht darauf, daß durch den 2-Punkt-Hystereseregler im Wechselrichter-Leistungsteil 10 ein 3-Phasen-Referenzsinussystem (Sollwertverläufe) mit den Istströmen der Asynchronmaschine 11 verglichen wird, wodurch die passenden Ansteuersignale für den nicht dargestellten Leistungsschalter im Wechselrichter-Leistungsteil 10 geliefert werden. Es handelt sich also um ein stromeinprägendes Verfahren. Die Hauptaufgabe dieses Modulationsverfahrens besteht darin, ein für jeden Betriebszustand der Maschine optimales Referenzsinussystem durch die Sollwert-Vorgabeeinrichtung 12 zu generieren. Es ist dadurch möglich, beliebige Kombinationen der Rotorfrequenz f₂ (Schlupffrequenz) und der Amplitude des Referenzsinussystems vorzugeben. Die Rotorfrequenz ist die Frequenz, die der Rotor der Asynchronmaschine 11 tatsächlich "sieht", und zwar unabhängig von der augenblicklichen Drehzahl des Rotors. Dazu prägt man dem Stator der Maschine durch das Referenzsinussystem eine um die gewünschte Rotorfrequenz f₂ größere Frequenz ein, als es der mechanischen Drehzahl entsprechend würde. Dem Wechselrichter-Leistungsteil 10 ist in an sich bekannter, jedoch nicht dargestellter Weise noch eine Zwischenkreisspannung zugeführt, die bei Elektrofahrzeugen die Batteriespannung ist.

Der Momentenwunsch des Fahrers des Elektrofahrzeugs oder einer sonstigen Bedienungsperson für die Asynchronmaschine beinhaltet drei Angaben, nämlich die gewünschte Fahrtrichtung, den Betrag des Moments und die Richtung des Moments (d. h. motorischer oder generatorischer Betrieb). Diese drei Angaben werden zur Erzeugung des Sollwertsystems benötigt. Zusätzlich sind Informationen über die Drehzahl und Drehrichtung der Asynchronmaschine 11 notwendig. Die Drehzahl fₙ der Asynchronmaschine 11 wird durch einen Inkrementalgeber 16 ermittelt, dessen Signale einer Summiereinrichtung 17 in der Sollwert-Vorgabeeinrichtung 12 zugeführt werden. Die gewünschte Fahrtrichtung (vorwärts/rückwärts) wird durch einen Fahrtrichtungsschalter 18 vorgegeben. Den Betrag des Moments gibt der Fahrer durch ein Fahrpedal 19 vor, wobei bei betätigtem Fahrpedal 19 ein motorischer Betrieb und bei nicht betätigtem Fahrpedal ein generatorischer Betrieb der Asynchronmaschine 11 vorliegt bzw. gewählt wird. Selbstverständlich ist im Elektrofahrzeug auch noch ein nicht dargestelltes Bremspedal vorgesehen. Die Pedalstellungen führen entweder zu einem Antriebssollwert oder zu einem Bremssollwert. Im Ruhezustand beider Pedale wird der Bremszustand eingestellt. In für sich bekannter Weise kann auch ein Fahrzeugmanagement-System vorgesehen sein, das die Sollwerte erzeugt.

Aus dem Betrag des vorgewählten Drehmoments wird der Betrag A der Amplitude des zu erzeugenden Referenzsinussystems die Rotorfrequenz f₂ und ein Lastwinkelsignal Lw erzeugt. Hierzu ist das Fahrpedal 19 mit einer Signalerzeugerstufe 20 gekoppelt, die ausgangsseitig ein der Fahrpedalstellung entsprechendes Sollwertsignal sw für das Drehmoment erzeugt. Aus diesem Signal sw werden aus einer Rotorfrequenz-Tabelle 21 und einer Amplitudenfrequenz-Tabelle 22 die zu jedem Sollwertwunsch gehörige optimale Kombination der Werte f₂ und A ausgewählt. Zusätzlich kann noch aus einer nicht dargestellten dritten Tabelle das Lastwinkelsignal Lw ausgewählt werden.

Das zu erzeugende Referenzsinussystem wird nun durch i-Stützstellen angenähert. Die Drehzahl wird durch den Inkrementalgeber 16 mit n-Signalen pro Umdrehung ermittelt und die Asynchronmaschine hat p-Polpaare. Der Grundgedanke ist jetzt, daß man die Drehzahl bzw. die Phase des elektrischen Systems der mechanischen Drehbewegung des Rotors nachführt und damit einen Referenzsinus hat, der zunächst einmal synchron zur mechanischen Drehbewegung ist. Dies geschieht dadurch, daß jedes Signal des Inkrementalgebers direkt zu einem Weiterschalten der Phase des Referenzsinus entsprechend seiner Wertigkeit führt. Die Wertigkeit ist dabei abhängig von der Signalzahl des Inkrementalgebers pro Umdrehung und der Polpaarzahl des Motors.

Um ein Moment zu erhalten, muß man die Frequenz dieses Referenzsinus gerade um die für den jeweiligen Momentenwunsch passende Rotorfrequenz f₂ erhöhen oder erniedrigen und zwar abhängig von der augenblicklichen Drehrichtung, der gewünschten Drehrichtung und der Richtung des gewünschten Moments. Wenn man diese Parameter freizügig variieren kann, dann wird ein vollwertiger 4-Quadrantenantrieb realisiert. Diese Realisierung erfolgt durch die Summiereinrichtung 17.

In der Summiereinrichtung 17 werden die Inkrementalgebersignale fₙ über eine Vorsubtraktionsstufe 23 einer ersten Umschalteinrichtung 24 zugeführt, wobei diese Signale in der Vorwärts-Schaltstellung einem Akkumulator 25 und in der Rückwärts-Schaltstellung über eine Vorzeichen-Änderungsstufe 26 dem Akkumulator 25 zugeführt werden. Das Vorwärts-/Rückwärts-Schaltsignal für die erste Umschalteinrichtung 24 wird in an sich bekannter Weise aus den Signalen des Inkrementalgebers 16 gewonnen.

Weiterhin wird die Rotorfrequenz f₂ einer zweiten Umschalteinrichtung 27 zugeführt, wo sie im Generatorbetrieb G einem Subtrahiereingang der Vorsubtraktionsstufe 23 und im Motorbetrieb M einer dritten Umschalteinrichtung 28 zugeführt werden. Die beiden Schaltstellungen (Generatorbetrieb G/Motorbetrieb M) werden durch das Fahrpedal 19 als Sollgrößen vorgegeben. Die beiden Schaltstellungen (vorwärts V/rückwärts R) der dritten Umschalteinrichtung 28 werden durch den Fahrtrichtungsschalter 18 ebenfalls als Sollgrößen vorgegeben. In der Vorwärts-Schaltstellung werden die Rotorfrequenz-Signale f₂ direkt dem Akkumulator 25 und in der Rückwärts-Schaltstellung diesem Akkumulator 25 über eine Vorzeichen-Änderungsstufe 29 zugeführt.

Im Generatorbetrieb wird in der Vorsubtraktionsstufe 23 die Wertigkeit der Inkrementalgeberimpulse fₙ entsprechend der Rotorfrequenz f₂ verringert. Die so erhaltenen Signale werden durch die erste Umschalteinrichtung 24 in Abhängigkeit davon, ob eine Vorwärts- oder Rückwärtsfahrt vorliegt, als positive oder negative Impulse dem Akkumulator 25 zugeführt, wo entsprechend eine Addition oder Subtraktion stattfindet. Im Motorbetrieb werden die Rotorfrequenzsignale f₂ in Abhängigkeit davon, ob eine Vorwärts- oder Rückwärtsfahrt über die dritte Umschalteinrichtung 28 vorgewählt wurde, dem Akkumulator als positive oder negative Signale zugeführt, so daß der Inhalt des Akkumulators 25 bei Vorwärtsfahrt um die Wertigkeit der Rotorfrequenz erhöht und bei gewünschter Rückwärtsfahrt erniedrigt wird.

Dem Akkumulator 25 ist eine Lastwinkel-Addierstufe 30 nachgeschaltet, in der dem Akkumulatorwert noch ein Lastwinkelwert Lw zuaddiert wird. Durch diese Lastwinkelvorsteuerung wird das System noch einmal in der Phase manipuliert, wobei es bei Fahrzeugantrieben in der Regel ausreichend ist, den Betrag des Lastwinkels konstant zu halten, nur die Richtung muß jeweils in Richtung des gewünschten Moments zeigen. Bei hochdynamischen Antrieben wird zu jedem Momentenwunsch ein anderer Betrag des Lastwinkels gehören. Aus diesem Grunde kann eine so feine Lastwinkel-Addierstufe 30 bei Fahrzeugantrieben entfallen.

Der durch die Lastwinkel-Addierstufe 30 korrigierte Akkumulatorwert stellt die Adresse für eine nachgeschaltete Sinustabelle 31 dar. Es werden dort zwei um 120° versetzte normierte Sinussignale Iₛₙ₁ und Iₛₙ₂ gebildet. Diese normierten Sinussignale werden in der nachgeschalteten Multiplizierstufe 32 mit der passenden Amplitude A des zu erzeugenden Sinussollwertsystems _{Is1} und _{Is2} mutipliziert. Mittels einer Addierstufe 33 und einer Vorzeichen-Änderungsstufe 34 erhält man auf einfache Weise den dritten Sollwert Iₛ₃.

## Patentansprüche

1. Regelungsvorrichtung für eine Asynchronmaschine (11), insbesondere als Antrieb für Elektrofahrzeuge, mit einem Inkrementalgeber (16) für die Drehzahl der Asynchronmaschine (11) und einem Drehmoment-Sollwertgeber (19), deren Signale einer Sollwert-Vorgabeeinrichtung (12) zur Erzeugung von Sollwerten in einem 3-Phasen-Referenzsinussystem für einen geregelten Wechselrichter oder Wechselrichter-Leistungsteil (10) zum Betrieb der Asynchronmaschine (11) zuführbar sind, wobei die Sollwert-Vorgabeeinrichtung (12) Mittel (20 - 22) zur Vorgabe wenigstens der Rotorfrequenz bzw. Schlupffrequenz (f₂) und der Amplitude (A) in Abhängigkeit des gewünschten Drehmoment-Sollwerts (sw) besitzt, und wobei eine Summiereinrichtung (17) zum Addieren oder Subtrahieren der Rotorfrequenz (f₂) mit oder von der der Drehzahl entsprechenden mechanischen Drehfrequenz (fₙ) der Asynchronmaschine (11) abhängig von der augenblicklichen Drehrichtung, der gewünschten Drehrichtung und der Richtung des gewünschten Drehmoments vorgesehen ist, dadurch gekennzeichnet, daß durch das Ausgangssignal der Summiereinrichtung aus einem Sollwertspeicher (31) Stromverläufe für den Wechselrichter oder Wechselrichter-Leistungsteil (10) auswählbar sind, deren Amplituden in Abhängigkeit der vorgegebenen Amplitude (A) einstellbar sind.

2. Regelungsvorrichtung nach Anspruch 1, dadurch gekennzeichnet, daß die Sollwert-Vorgabeeinrichtung (12) Funktionstabellen (21, 22) für die Rotorfrequenz (f₂), die Amplitude (A) des Statorstroms und bei Erfordernis auch noch für die Lastwinkelvorsteuerung (Lw) in Abhängigkeit des gewünschten Drehmoment-Sollwerts (sw) enthält.

3. Regelungsvorrichtung nach Anspruch 1 oder 2, dadurch gekennzeichnet, daß die Summiereinrichtung (17) eine in Abhängigkeit der jeweiligen Drehrichtung der Asynchronmaschine (11) automatisch umschaltende erste Schalteinrichtung (24) besitzt, durch die in der Rückwärts-Schaltstellung die der mechanischen Drehfrequenz proportionalen Signale (fₙ) des Inkrementalgebers (16) negativ und in der Vorwärts-Schaltstellung positiv bewertet werden.

4. Regelungsvorrichtung nach Anspruch 3, dadurch gekennzeichnet, daß die Summiereinrichtung (17) eine in Abhängigkeit der gewünschten Richtung des Drehmoments (Generator-/Motorbetrieb) umschaltende zweite Schalteinrichtung (27) besitzt, wobei im Generatorbetrieb die der Rotorfrequenz entsprechenden Signale (f₂) von den Signalen des Inkrementalgebers (fₙ) vor der Bewertung durch die erste Schalteinrichtung (24) abgezogen und im Motorbetrieb die der Rotorfrequenz entsprechenden Signale (f₂) den durch die erste Schalteinrichtung (24) bewerteten Signalen des Inkrementalgebers (fₙ) bei vorgegebener Vorwärts-Drehrichtung hinzugefügt und bei vorgegebener Rückwärts-Drehrichtung von diesen abgezogen werden.

5. Regelungsvorrichtung nach Anspruch 4, dadurch gekennzeichnet, daß eine dritte, durch einen Fahrtrichtungsschalter (18) steuerbare Schalteinrichtung (28) zur Bewertung der der Rotorfrequenz entsprechenden Signale (f₂) bei der gewünschten Vorwärts- und Rückwärts-Drehrichtung vorgesehen ist.

6. Regelungsvorrichtung nach einem der Ansprüche 3 bis 5, dadurch gekennzeichnet, daß ein Akkumulator (25) zur Bildung eines Referenzsignals aus den Signalen (fₙ) des Inkrementalgebers und den der Rotorfrequenz entsprechenden Signalen (f₂) vorgesehen ist.

7. Regelungsvorrichtung nach Anspruch 6, dadurch gekennzeichnet, daß die Ausgänge der ersten und dritten Schalteinrichtung (24, 28) mit Eingängen des Akkumulators (25) verbunden sind.

8. Regelungsvorrichtung nach einem der vorhergehenden Ansprüche, dadurch gekennzeichnet, daß der in der Summiereinrichtung (17) ermittelte Wert jeweils eine Adresse für eine als Sollwertspeicher (31) dienende Sinustabelle bildet.

9. Regelungsvorrichtung nach Anspruch 8, dadurch gekennzeichnet, daß eine Lastwinkel-Korrekturstufe (30) zur Korrektur der Adressenwerte in Abhängigkeit eines jeweils zum gewünschten Drehmoment passenden Lastwinkels (Lw) vorgsehen ist, die insbesondere als Addierstufe ausgebildet ist.

10. Regelungsvorrichtung nach einem der vorhergehenden Ansprüche, dadurch gekennzeichnet, daß dem Sollwertspeicher (31) eine Multiplizierstufe zur Multiplikation der Strom-Sollwertverläufe mit dem jeweils vorgegebenen Amplitudenwert (A) nachgeschaltet ist.

11. Regelungsvorrichtung nach einem der vorhergehenden Ansprüche, dadurch gekennzeichnet, daß dem Sollwertspeicher (31) und/oder der Multiplizierstufe (32) eine Stufe (33, 34) zur Erzeugung der für die Regelung erforderlichen drei Strom-Sollwertverläufe zugeordnet ist.

12. Regelungsvorrichtung nach einem der vorhergehenden Ansprüche, dadurch gekennzeichnet, daß der geregelte Wechselrichter oder Wechselrichter-Leistungsteil (10) einen 2-Punkt-Regler, insbesondere einen 2-Punkt-Hystereseregler enthält.

## Claims

1. Control appliance for an asynchronous machine (11), in particular as the drive for electric vehicles, having an incremental sensor (16) for the rotational speed of the asynchronous machine (11) and a required torque value sensor (19) whose signals can be supplied to a required value specification device (12) to generate required values in a 3-phase reference sine-wave system for a controlled inverter or inverter output part (10) for driving the asynchronous machine (11), the required value specification device (12) having means (20-22) for the specification of at least the rotor frequency or slip frequency (f₂) and the amplitude (A), as a function of the desired required torque value (sw), and a summation device (17) for adding or subtracting the rotor frequency (f₂) being provided with the mechanical rotational frequency (fₙ), corresponding to the rotational speed, of the asynchronous machine (11) as a function of the momentary direction of rotation, the desired direction of rotation and the direction of the desired torque, characterized in that by means of the output signal of the summation device, current functions for the inverter or inverter output part (10) can be selected from a required value memory (31), the amplitudes of which current functions can be adjusted as a function of the specified amplitude (A).

2. Control appliance according to Claim 1, characterized in that the required value specification device (12) contains, as a function of the desired required torque value (sw), function tables (21, 22) for the rotor frequency (f₂), the amplitude (A) of the stator current and, if required, also for the load angle pre-control (Lw).

3. Control appliance according to Claim 1 or 2, characterized in that the summation device (17) has a first switching device (24), which switches over automatically as a function of the respective direction of rotation of the asynchronous machine (11) and by means of which the signals (fₙ), proportional to the mechanical rotational frequency, of the incremental sensor (16) are evaluated negatively in the reverse switching position and are evaluated positively in the forward switching position.

4. Control appliance according to Claim 3, characterized in that the summation device (17) has a second switching device (27), which switches over as a function of the desired direction of the torque (generator/motor operation), the signals (f₂) corresponding to the rotor frequency being subtracted from the signals of the incremental sensor (fₙ) before the evaluation by the first switching device (24) in generator operation and the signals (f₂) corresponding to the rotor frequency being added to the signals of the incremental sensor (fₙ) evaluated by the first switching device (24) in motor operation when the forward rotational direction is specified and are subtracted from them when the reverse direction of the rotation is specified.

5. Control appliance according to Claim 4, characterized in that a third switching device (28), which can be controlled by a direction of travel switch (18), is provided for evaluating the signals (f₂) corresponding to the rotor frequency in the case of the desired forward and reverse directions of rotation.

6. Control appliance according to one of Claims 3 to 5, characterized in that an accumulator (25) is provided to form a reference signal from the signals (fₙ) of the incremental sensor and the signals (f₂) corresponding to the rotor frequency.

7. Control appliance according to Claim 6, characterized in that the outputs of the first and third switching devices (24, 28) are connected to the inputs of the accumulator (25).

8. Control appliance according to one of the preceding claims, characterized in that each value determined in the summation device (17) forms an address for a sine-wave table acting as a required value memory (31).

9. Control appliance according to Claim 8, characterized in that a load angle correction stage (30) is provided to correct the address values as a function of a respective load angle (Lw) matching the desired torque, which correction stage (30) is configured, in particular, as an addition stage.

10. Control appliance according to one of the preceding claims, characterized in that a multiplication stage for multiplying the required current value functions by the respectively specified amplitude value (A) is connected downstream of the required value memory (31).

11. Control appliance according to one of the preceding claims, characterized in that a stage (33, 34) for generating the three required current value functions necessary for the control system is associated with the required value memory (31) and/or the multiplication stage (32).

12. Control appliance according to one of the preceding claims, characterized in that the controlled inverter or inverter output part (10) contains a 2-point controller, in particular a 2-point hysteresis controller.

## Revendications

1. Dispositif de régulation pour un moteur asynchrone (11), en particulier comme organe d'entraînement de véhicules électriques, comprenant un capteur incrémentiel (16) pour la vitesse de rotation du moteur asynchrone (11) et un capteur (19) de valeurs de consigne de couple de torsion, dont les signaux peuvent être amenés à un dispositif (12) de prédéfinition de valeurs de consigne qui sert à produire des valeurs de consigne dans un système sinus triphasé de référence pour un onduleur régulé ou pour la partie de puissance (10) d'un onduleur pour faire fonctionner le moteur asynchrone (11), le dispositif (12) de prédéfinition des valeurs de consigne possédant des moyens (20 à 22) pour prédéfinir au moins la fréquence de rotor ou la fréquence de glissement (f₂) et l'amplitude (A) en fonction de la valeur de consigne (sw) voulue du couple de torsion, et un dispositif d'addition (17) pour additionner ou à soustraire la fréquence de rotor (f₂), étant prévu avec ou par la fréquence de rotation (fn) mécanique du moteur asynchrone (11) qui correspond à la vitesse de rotation, en fonction du sens instantané de rotation, du sens de rotation voulu et du sens du couple de torsion voulu,
caractérisé en ce qu'
on peut sélectionner par le signal de sortie du dispositif d'addition à partir d'une mémoire de valeurs de consigne (31) des gradients d'intensité pour l'onduleur ou pour la partie de puissance (10) de l'onduleur, gradients dont les amplitudes peuvent être régulées en fonction de l'amplitude (A) prédéfinie.

2. Dispositif de régulation selon la revendication 1,
caractérisé en ce que
le dispositif (12) de prédéfinition des valeurs de consigne contient des tables de fonctionnement (21, 22) pour la fréquence de rotor (f₂), l'amplitude (A) du courant du stator et en cas de besoin encore aussi pour la commande préalable Lw de l'angle de charge en fonction de la valeur de consigne (sw) voulue pour le couple de torsion.

3. Dispositif de régulation selon la revendication 1 ou 2,
caractérisé en ce que
le dispositif de sommation (17) possède un premier dispositif de branchement (24) qui commute automatiquement en fonction du sens respectif de rotation du moteur asynchrone (11), dispositif de branchement (24) grâce auquel dans la position de branchement en arrière les signaux (fn) qui sont proportionnels à la fréquence mécanique de rotation, du capteur incrémentiel (16) reçoivent une valeur négative et dans la position de branchement en avant une valeur positive.

4. Dispositif de régulation selon la revendication 3,
caractérisé en ce que
le dispositif d'addition (17) possède un deuxième dispositif de branchement (27) qui commute en fonction du sens voulu du couple de torsion (fonctionnement en génératrice ou fonctionnement en moteur), et en fonctionnement en génératrice les signaux (f₂) qui correspondent à la fréquence de rotor, sont retranchés des signaux du capteur incrémentiel (fₙ) avant leur valorisation par le premier dispositif de branchement (24) et dans le cas du fonctionnement en moteur, les signaux (f₂) qui correspondent à la fréquence de rotor, sont ajoutés aux signaux du capteur incrémentiel (fn), valorisés par le premier dispositif de branchement (24), dans le cas d'un sens de rotation prédéfini en avant et sont retranchés de ceux-ci dans le cas d'un sens de rotation prédéfini en arrière.

5. Dispositif de régulation selon la revendication 4,
caractérisé en ce que
on prévoit un troisième dispositif de branchement (28) qui peut être commandé par un commutateur (18) de sens de marche, pour valoriser les signaux (f₂) qui correspondent à la fréquence de rotor, dans le cas du sens de rotation voulu en avant et en arrière.

6. Dispositif de régulation selon l'une des revendications 3 à 5,
caractérisé en ce qu'
il est prévu un accumulateur (25) pour former un signal de référence à partir des signaux (fₙ) du capteur incrémentiel et à partir des signaux (f₂) qui correspondent à la fréquence de rotor.

7. Dispositif de régulation selon la revendication 6,
caractérisé en ce que
les sorties du premier et du troisième dispositif de branchement (24, 28) sont reliées aux entrées de l'accumulateur (25).

8. Dispositif de régulation selon l'une des revendications précédentes,
caractérisé en ce que
la valeur qui est déterminée dans le dispositif de sommation (17) constitue respectivement une adresse pour une table de sinus servant de mémoire (31) de valeurs de consigne.

9. Dispositif de régulation selon la revendication 8,
caractérisé en ce qu'
il est prévu un étage de correction (30) d'angle de charge, qui sert à corriger les valeurs d'adresse en fonction d'un angle de charge (Lw) adapté respectivement au couple de torsion voulu, angle de charge (Lw) qui est constitué en particulier comme étage d'addition.

10. Dispositif de régulation selon l'une des revendications précédentes,
caractérisé en ce qu'
on branche en aval de la mémoire (31) des valeurs de consigne un étage de multiplication qui sert à multiplier les gradients de valeurs de consigne des intensités par la valeur d'amplitude (A) respectivement prédéfinie.

11. Dispositif de régulation selon l'une des revendications précédentes,
caractérisé en ce qu'
on associe à la mémoire (31) des valeurs de consigne et/ou à l'étage de multiplication (32) un étage (33, 34) qui sert à produire les trois gradients des valeurs de consigne des intensités qui sont nécessaires à la régulation.

12. Dispositif de régulation selon l'une des revendications précédentes,
caractérisé en ce que
l'onduleur régulé ou la partie de puissance (10) de l'onduleur régulé contient un régulateur à deux points, en particulier un régulateur d'hystérésis à deux points.
